# EUROPEAN PATENT SPECIFICATION

(11) **EP 2 730 957 B1**
(45) Date of publication and mention of the grant of the patent: **28.10.2020**
(21) Application number: 12191942.7
(22) Date of filing: 09.11.2012
(51) Int. Cl.: H01H 13/83, H04M 1/22, F21V 8/00, H04M 1/23

(54) **Method and apparatus pertaining to keycap light guides**
Verfahren und Vorrichtung für Tastenkappen-Lichtführungen
Procédé et appareil relatifs à des guides de lumière pour touches de clavier

(43) Date of publication of application: 14.05.2014
(73) Proprietor: BlackBerry Limited, Waterloo, ON N2K 0A7 (CA)
(72) Inventor: Li, Xiaofeng, Waterloo, ON N2L 3W8 (CA); Chen, Chao, Waterloo, ON N2L 3W8 (CA); Huang, Li, Waterloo, ON N2L 3W8 (CA)
(74) Representative: Vigand, Philippe

(56) References cited:
- US-A1- 2011 149 605
- US-A1- 2011 290 629

## Description

### Field of Technology

The present disclosure relates generally to keyboards and more particularly to the use of backlighting for keycaps.

### Background

Electronic devices of various sizes often employ keyboards to facilitate the entry of user input. Examples of such keyboards include keyboards configured to facilitate the entry of alphanumeric characters (such as the ubiquitous QWERTY-styled keyboard) as well as special-purpose keyboards (such as the also-ubiquitous telephone-keypad-styled keyboard). While some of these keyboards are so-called virtual keyboards that comprise the presentation of interactive keycaps on, for example, a touch-sensitive display, physical keyboards comprised of one or more moving mechanical elements remain in demand (often as a preferred user-entry modality).

Many physical keyboards include backlighting. Backlighting serves to direct light to the backside of one or more of the keyboard's keycaps to thereby illuminate part or all of the keycap and/or informational content presented thereon. For example, alphanumeric characters displayed on the keycaps illuminated in this fashion can make it considerably easier for the user to locate desired keys when entering content.

While many backlighting techniques are well known in the art, unfortunately such known practices are not wholly satisfactory in all application settings. For example, backlighting across the keyboard may not be completely consistent for any of a variety of reasons. Such inconsistency, in turn, can produce unduly bright and/or unduly dim illuminated areas on the keyboard. Such inconsistencies, in turn, can render accurate use of the keyboard more problematic and/or can otherwise detract from the aesthetic quality of the keyboard and the corresponding electronic device,

US patent application publication number US 2011/149605 A1 discloses a backlit keyboard comprising a light guide film underlying the keycaps, the light guide film having protrusions in registration with each of the keycaps to transmit pressure from the respective keycaps to the electrical contacts when the keycaps are pressed. Each keycap is illuminated thanks to a scattering portion formed on the light guide film in registration with each keycap.

### Brief Description of the Drawings

FIG. 1 is a flow diagram in accordance with the disclosure.
FIG. 2 is a top plan view in accordance with the disclosure.
FIG. 3 is a perspective detail view in accordance with the disclosure.
FIG. 4 is an enlarged perspective detail view in accordance with the disclosure.
FIG. 5 is a perspective exploded view in accordance with the disclosure.
FIG. 6 is a perspective exploded view in accordance with the disclosure.

### Detailed Description

The following describes an apparatus and method pertaining to an apparatus (such as a keyboard) having a plurality of keycaps and a corresponding light guide film disposed on the underside of those keycaps. The light guide film has a periphery, and at least portions of that periphery are thicker than an interior portion of the light guide film. So configured, more light can be made available for backlighting purposes in the thicker portions than at the thinner portions. These teachings then include determining the various (different) thicknesses to employ for the light guide film based upon desired backlighting of one or more of the plurality of keycaps.

By one approach the light guide film comprises a soft light guide film. The backlighting source(s) itself can comprise, by one approach, one or more light sources (such as, for example, side-firing light-emitting diodes) that are disposed to direct light into the light guide film substantially parallel thereto.

These teachings are highly flexible in practice and will accommodate all manner and variety of keyboards and keycaps. In addition, while these teachings can serve to facilitate even backlighting across the range and expanse of a given keyboard, these teachings can also serve to intentionally reduce or increase backlighting at specific locations of the keyboard to serve a particular corresponding aesthetic or utilitarian purpose.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described.

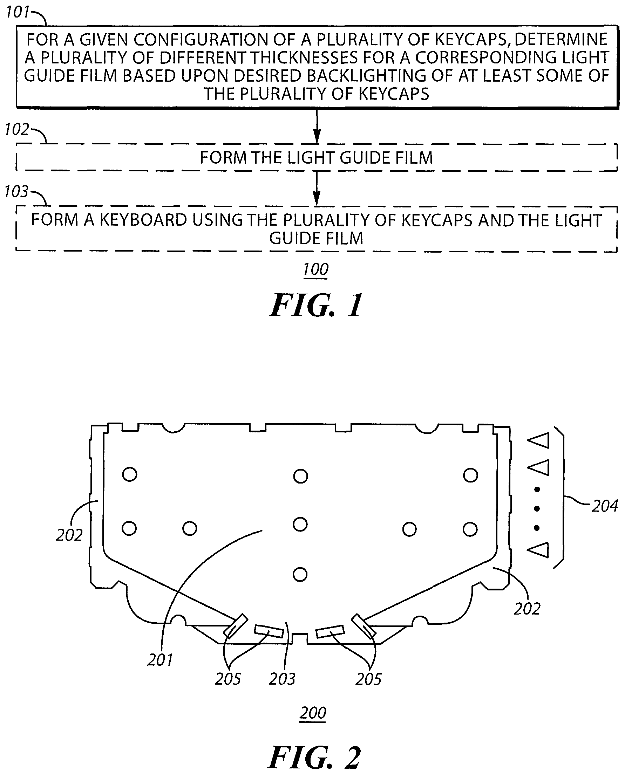

FIG. 1 presents a process 100 that accords with the present teachings. At 101 this process 100 provides for determining, for a given configuration of a plurality of keycaps, a plurality of different thicknesses for a corresponding light guide film based upon desired backlighting of at least some of those keycaps. By one approach this determination comprises determining at least a portion of a periphery portion of the light guide film that comprises some thicker portions that are thicker than an interior portion. This determination can also comprise, at least in part, determining a thinner peripheral portion of the light guide film than at an interior portion thereof.

That done, at 102 this process 100 can then optionally provide for forming a light guide film in accordance with the foregoing determination and then, at 103, forming a keyboard using that plurality of keycaps and the resultant light guide film. By one approach, that forming activity can comprise, at least in part, co-molding thicker portions of the light guide film with less-thick portions of the light guide film.

So configured, and when using, for example, side-firing light sources, the thicker areas of the light guide film can convey a larger amount of light than the thinner areas. Accordingly, the backlighting provided by the thicker areas of the light guide film can be brighter than the thinner areas of the light guide film (all other things being equal).

The thickness determinations made at 101 will vary from one application setting to another. Various influencing factors can include, but are not limited to, the specifics of the light sources themselves (such as their intensity and color), the orientation of the light sources, the distance of the light sources from the light guide film, the number of light sources, the specific material (or materials) that comprise the light guide film, and the size and shape of the light guide film (to note but a few examples in these regards).

These thickness determinations can also take into account, if desired, the specifics of the keycaps themselves. As one illustrative example in these regards, one keycap may have a very different light-diffusing approach than another keycap and hence may need less, or more, backlighting in order to appear the same as the other keycap.

Accordingly, the contemplated thickness determinations at 101 are subject to a great number of application-setting specifics as well as possible subjective goals regarding aesthetics and other light-based design criteria. By one approach these determinations at 101 can be empirically determined through experimentation. By another approach, if desired, the various parameters of interest can be modeled as a computer program to permit virtual design and determination activity.

For the sake of illustration a specific example will now be provided in these regards. It will be understood that the specifics of this example are offered for the sake of illustration and are not intended to suggest any particular limitations in these regards.

FIG. 2 presents a view of a light guide film 200. This light guide film 200 has a particular form factor that compliments a corresponding keyboard (not yet shown) as will be well understood in the art. In this example the light guide film 200 comprises a soft light guide film 200 formed, for example, of silicon rubber, an optical-grade clear rubber, or a thermoplastic urethane.

If desired, the light guide film 200 can comprise more than one such material. For example, a thicker portion of the light guide film 200 can comprise a base layer of silicon rubber and an upper layer can be comprised of thermoplastic urethane. When using more than one such material the formation of the light guide film 200 can include, for example, co-molding the two materials/layers with one another. Generally speaking, co-molding techniques and methodologies using such materials comprises a well-understood area of endeavor. Accordingly, further elaboration in these regards will not be provided here for the sake of brevity.

In this example the interior portions 201 of the light guide film 200 have a substantially uniform thickness. Opposing side peripheral areas 202, however, are thicker than the aforementioned interior portions 201 as per the thickness determination described above. That said, in this illustrative example it will be noted that not all portions of the light guide film's 200 periphery are thicker than the interior thickness. For example, the front periphery 203 of the light guide film 200 has the same thickness as the aforementioned interior portion 201.

When completed, the keyboard assembly will include, in this example, a plurality of light sources 204 (such as, but not limited to, light-emitting diodes) disposed along at least a portion of the periphery of the light guide film 200. In many application settings it will serve well for these light sources 204 to be disposed and oriented to direct their light into the light guide film 200 substantially parallel thereto. The present teachings will accommodate various practices in these regards. For example, some or all of the light sources 204 may or may not have their corresponding light beams oriented substantially parallel to one another as well if desired.

These teachings will also accommodate, in lieu of the foregoing or in combination therewith, including one or more light sources within the interior of the light guide film 200 if desired. For example, by one approach one or more light sources can each be disposed within a corresponding rectangularly-shaped opening 205 provided therefor in the light guide film 200. By one approach, such an interior-disposed light source can also be configured to direct its light substantially parallel (or not) to the light guide film 200 in some desired direction.

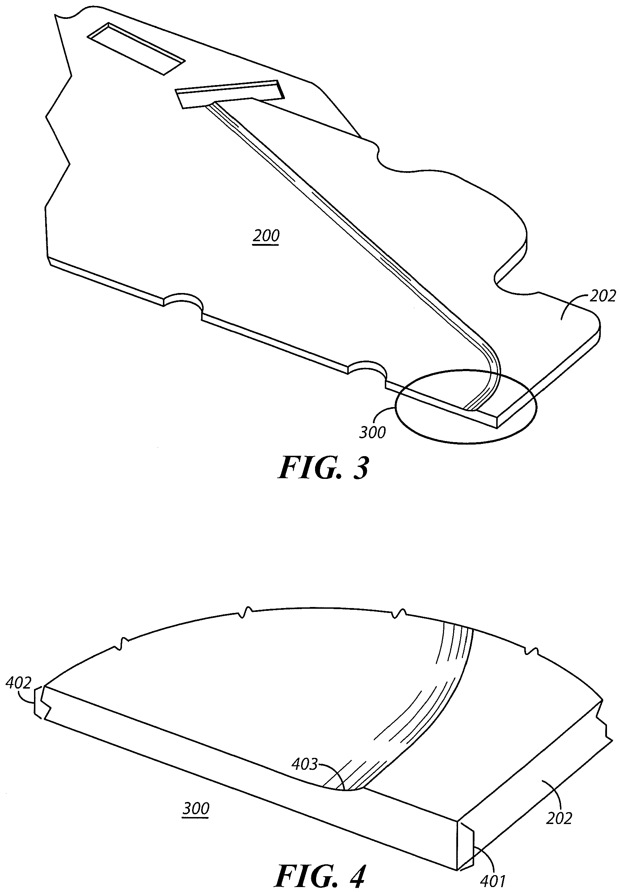

FIGS. 3 and 4 provide further illustrative details regarding the differing thicknesses described above. Referring in particular to the detail area denoted by reference numeral 300, the thinner area is shown as having a first thickness as denoted by reference numeral 402 whereas the thicker area at the periphery 202 is shown as having a second thickness (denoted by reference numeral 401) that is larger than the first thickness 402.

By one approach, if desired, differences in thickness can comprise an abrupt step function. By another approach, and as illustrated, the thicker areas can meet the thinner areas via a thickness gradient 403. The specific shape and size of such a thickness gradient 403 can vary as desired.

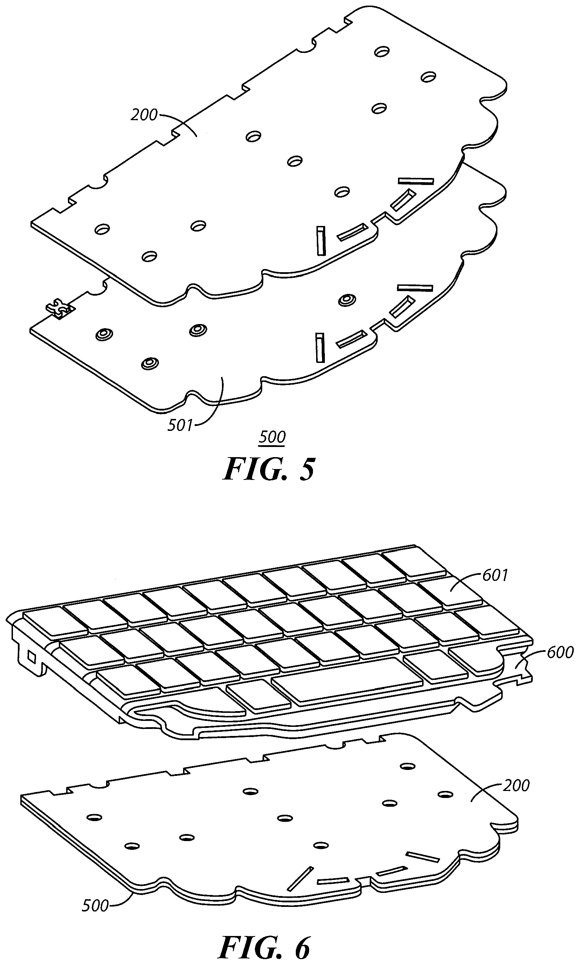

Referring now to FIG. 5 the aforementioned light guide film 200 is secured to a lower plate 501. This lower plate 501 can, for example, provide strength and rigidity to the resultant light guide film subassembly 500 and can also help to prevent light from escaping through the bottom side of the light guide film 200. Various approaches in these regards are known in the art. As the present teachings are not overly sensitive to any particular choices in these regards, further details are not provided regarding such a lower plate 501 or subassembly 500.

Referring now to FIG. 6, the aforementioned light guide film subassembly 500 can be secured to the underside of a corresponding keypad subassembly 600 that features a plurality of keycaps 601 on its upper surface. In particular, the light guide film subassembly 500 is joined to the keypad subassembly 600 such that the upper surface of the light guide film 200 underlies the keycaps 601. So configured, the light guide film 200 can provide backlighting to the keycaps 601 in accordance with well-understood practice.

According to the invention, however, the backlighting intensity provided by the light guide film 200 will vary due to the varying thicknesses of the light guide film 200 described above. As a result, in this particular embodiment of the invention, the thicker portions at the periphery of the light guide film 200 will provide brighter backlighting in this area than would have occurred if the light guide film 200 were of all the same thickness. It is presumed in this embodiment of the invention that this increased level of backlighting serves a desired and intended purpose. At least some of those thicker portions of the light guide film 200 are disposed in registration with some, but not all, of the keycaps 601 to effect the resultant brighter backlighting effect with respect to those particular keycaps 601.

As mentioned above these teachings are highly flexible in practice. One may, for example, also include interior portions of the light guide film 200 that are thicker than other interior portions of the light guide film 200. In such a case these interior portions may be as thick as, for example, the peripheral portions. These teachings will also accommodate, however, having thicker interior portions that are nevertheless thinner than the periphery or, if desired, thicker than the periphery.

These teachings will also accommodate having some interior portions of the light guide film 200 relatively thinner than other interior portions. Such an approach can serve, for example, to resolve local areas of unduly bright backlighting that may be occurring for whatever reason.

Accordingly, it will be understood that these teachings generally provide for intentionally sculpting the relative thicknesses of a light guide film 200 to provide lesser or greater amounts of backlighting to thereby achieve a desired backlighting effect for the keycaps 601 of a given keyboard. By one approach, for example, this can serve to ensure uniform backlighting across all keycaps 601. These teachings will also support, however, purposefully creating relatively brighter and/or darker areas of backlighting to achieve specific corresponding aesthetic results.

The present disclosure may be embodied in other specific forms without departing from its essential characteristics. The described embodiments are to be considered in all respects only as illustrative. The scope of the invention is, therefore, indicated by the appended claims.

## Claims

1. An apparatus comprising:
a plurality of keycaps (601);
a light guide film (200) disposed on an underside of the plurality of keycaps, the light guide film having a periphery and wherein at least portions (202) of the periphery are thicker than an interior portion (201) of the light guide film and wherein at least some of the thicker portions of the light guide film are disposed in registration with some, but not all, of the plurality of keycaps and configured to effect a backlighting effect with respect to said some, but not all, of the plurality of keycaps.

2. The apparatus of claim 1 wherein at least some of the thicker portions of the light guide film are disposed in registration with a plurality, but not all, of the plurality of keycaps and configured to effect a backlighting effect with respect to the plurality, but not all, of the plurality of keycaps.

3. The apparatus of claim 1 wherein the light guide film comprises a soft light guide film.

4. The apparatus of claim 3 wherein the light guide film comprises, at least in part at least one of:
silicon rubber;
an optical grade clear rubber; and
thermoplastic urethane.

5. The apparatus of claim 1 further comprising:
a plurality of light sources (204) disposed along at least a portion of the periphery of the light guide film.

6. The apparatus of claim 5 wherein at least some of the plurality of light sources are disposed to direct light into the light guide film substantially parallel thereto.

7. The apparatus of claim 1 wherein at least one portion of the periphery is thinner than an interior portion of the light guide film.

8. A method comprising:
a first step of, for a given configuration of a plurality of keycaps (601), determining (101) a plurality of different thicknesses for a corresponding light guide film (200) configured to be disposed on an underside of the plurality of keycaps based upon desired backlighting of at least some of the plurality of keycaps; said first step comprising the first sub-step of
determining at least a portion of a periphery portion of the light guide film that comprises some thicker portions that are thicker than an interior portion, and the second sub-step of
determining a location for the at least a portion of the periphery portion such that some of the thicker portions are disposed in registration with some, but not all, of the plurality of keycaps and configured to effect a backlighting effect with respect to said some, but not all, of the plurality of keycaps.

9. The method of claim 8 wherein the light guide film comprises a soft light guide film.

10. The method of claim 8 wherein determining the plurality of different thicknesses for the corresponding light guide film comprises, at least in part, determining at least one of a thicker peripheral portion (202) and a thinner peripheral portion of the light guide film than an interior portion (201) thereof.

11. The method of claim 8 further comprising:
forming (102) the light guide film;
forming (103) a keyboard using the plurality of keycaps and the light guide film disposed on an underside of the plurality of keycaps.

12. The method of claim 11 wherein forming the light guide film comprises, at least in part, co-molding thicker portions of the light guide film with less-thick portions of the light guide film.

13. The method of claim 11 wherein forming the keyboard further comprises disposing side-fired light sources (204) along a periphery of the light guide film.

14. The method of claim 13 wherein the side-fire light sources comprises light-emitting diodes.

## Patentansprüche

1. Vorrichtung umfassend:
eine Vielzahl von Tastenkappen (601);
eine Lichtleitfolie (200), die auf der Unterseite der Vielzahl von Tastenkappen angeordnet ist, wobei die Lichtleitfolie einen Umfang aufweist und wobei zumindest Abschnitte (202) des Umfangs dicker als ein innerer Abschnitt (201) der Lichtleitfolie sind und wobei zumindest einige der dickeren Abschnitte der Lichtleitfolie in Ausrichtung mit einigen, aber nicht allen, der Vielzahl von Tastenkappen angeordnet und dafür konfiguriert sind, einen Hintergrundbeleuchtungseffekt in Bezug auf diese einigen, aber nicht alle, der Vielzahl von Tastenkappen zu bewirken.

2. Vorrichtung nach Anspruch 1, wobei zumindest ein Teil der dickeren Abschnitte der Lichtleitfolie in Ausrichtung mit einer Vielzahl, aber nicht allen, der Vielzahl von Tastenkappen angeordnet und dafür konfiguriert ist, einen Hintergrundbeleuchtungseffekt in Bezug auf die Vielzahl, aber nicht alle der Vielzahl von Tastenkappen zu bewirken.

3. Vorrichtung nach Anspruch 1, wobei die Lichtleitfolie eine Folie zum Leiten von weichem Licht umfasst.

4. Vorrichtung nach Anspruch 3, wobei die Lichtleitfolie zumindest teilweise zumindest eines der folgenden umfasst:
Silikonkautschuk;
einen durchsichtigen Kautschuk mit optischer Qualität; und
thermoplastisches Urethan.

5. Vorrichtung nach Anspruch 1, die weiter umfasst:
eine Vielzahl von Lichtquellen (204), die entlang zumindest eines Teils des Umfangs der Lichtleitfolie angeordnet ist.

6. Vorrichtung nach Anspruch 5, wobei zumindest einige der Vielzahl von Lichtquellen derart angeordnet sind, dass sie Licht in die im Wesentlichen parallel dazu verlaufende Lichtleitfolie lenken.

7. Vorrichtung nach Anspruch 1, wobei zumindest ein Teil des Umfangs dünner ist als ein innerer Abschnitt der Lichtleitfolie.

8. Verfahren umfassend:
einen ersten Schritt des, für eine gegebene Konfiguration einer Vielzahl von Tastenkappen (601), Bestimmens (101) einer Vielzahl von unterschiedlichen Dicken für eine entsprechende Lichtleitfolie (200), die dafür konfiguriert ist, auf der Unterseite der Vielzahl von Tastenkappen angeordnet zu werden, basierend auf der gewünschten Hintergrundbeleuchtung von zumindest einigen der Vielzahl von Tastenkappen;
wobei der erste Schritt umfasst:
den ersten Teilschritt des Bestimmens zumindest eines Teils eines Umfangsabschnitts der Lichtleitfolie, der einige dickere Abschnitte aufweist, die dicker als ein innerer Abschnitt sind, und
den zweiten Teilschritt des Bestimmens einer Stelle für den zumindest einen Teil des Umfangsabschnitts, so dass einige der dickeren Abschnitte in Ausrichtung, mit einigen, aber nicht allen, der Vielzahl von Tastenkappen angeordnet sind, und dafür konfiguriert, einen Hintergrundbeleuchtungseffekt mit Bezug auf diese einigen, aber nicht alle, der Vielzahl von Tastenkappen zu bewirken.

9. Verfahren nach Anspruch 8, wobei die Lichtleitfolie eine Folie zum Leiten von weichem Licht umfasst.

10. Verfahren nach Anspruch 8, wobei das Bestimmen der Vielzahl von verschiedenen Dicken für die entsprechende Lichtleitfolie zumindest teilweise das Bestimmen zumindest entweder eines dickeren Umfangsabschnitts (202) oder eines dünneren Umfangsabschnitts der Lichtleitfolie als ein innerer Abschnitt (201) davon umfasst.

11. Verfahren nach Anspruch 8, das weiter umfasst:
Bilden (102) der Lichtleitfolie;
Bilden (103) einer Tastatur unter Verwendung der Vielzahl von Tastenkappen und der Lichtleitfolie, die auf der Unterseite der Vielzahl von Tastenkappen angeordnet wird.

12. Verfahren nach Anspruch 11, wobei das Bilden der Lichtleitfolie zumindest teilweise das Mitformen dickerer Abschnitte der Lichtleitfolie mit weniger dicken Abschnitten der Lichtleitfolie umfasst.

13. Verfahren nach Anspruch 11, wobei das Bilden der Tastatur weiter das Anordnen von seitlich abstrahlenden Lichtquellen (204) entlang eines Umfangs der Lichtleitfolie umfasst.

14. Verfahren nach Anspruch 13, wobei die seitlich abstrahlenden Lichtquellen Leuchtdioden umfassen.

## Revendications

1. Appareil comprenant :
une pluralité de dessus de touches (601) ;
un film de guide de lumière (200) disposé sur une face inférieure de la pluralité de dessus de touches, le film de guide de lumière ayant une périphérie, et dans lequel au moins des parties (202) de la périphérie sont plus épaisses qu'une partie intérieure (201) du film de guide de lumière, et dans lequel au moins certaines des parties plus épaisses du film de guide de lumière sont disposées en alignement avec certains, mais pas tous, de la pluralité de dessus de touches et configurées pour effectuer un effet de rétroéclairage par rapport auxdits certains, mais pas tous, de la pluralité de dessus de touches.

2. Appareil selon la revendication 1 dans lequel au moins certaines des parties plus épaisses du film de guide de lumière sont disposées en alignement avec une pluralité, mais pas tous, de la pluralité de dessus de touches et configurées pour effectuer un effet de rétroéclairage par rapport à la pluralité, mais pas tous, de la pluralité de dessus de touches.

3. Appareil selon la revendication 1 dans lequel le film de guide de lumière comprend un film souple de guide de lumière.

4. Appareil selon la revendication 3 dans lequel le film de guide de lumière comprend, au moins en partie au moins l'un parmi :
du caoutchouc de silicone ;
un caoutchouc clair de qualité optique ; et
de l'uréthane thermoplastique.

5. Appareil selon la revendication 1 comprenant en outre :
une pluralité de sources de lumière (204) disposées le long d'au moins une partie de la périphérie du film de guide de lumière.

6. Appareil selon la revendication 5 dans lequel au moins certaines de la pluralité de sources de lumière sont disposées pour diriger la lumière dans le film de guide de lumière sensiblement parallèlement à celui-ci.

7. Appareil selon la revendication 1 dans lequel au moins une partie de la périphérie est plus fine qu'une partie intérieure du film de guide de lumière.

8. Procédé comprenant :
une première étape consistant à
pour une configuration donnée d'une pluralité de dessus de touches (601), déterminer (101) une pluralité de différentes épaisseurs pour un film de guide de lumière (200) correspondant configuré pour être disposé sur une face inférieure de la pluralité de dessus de touches sur la base d'un rétroéclairage souhaité d'au moins certains de la pluralité de dessus de touches ; ladite première étape comprenant la première sous-étape consistant à
déterminer au moins une partie d'une partie de périphérie du film de guide de lumière qui comprend certaines parties plus épaisses qui sont plus épaisses qu'une partie intérieure, et la deuxième sous-étape consistant à
déterminer un emplacement pour l'au moins une partie de la partie de périphérie de sorte que certaines des parties plus épaisses soient disposées en alignement avec certains, mais pas tous, de la pluralité de dessus de touches et configurées pour effectuer un effet de rétroéclairage par rapport auxdits certains, mais pas tous, de la pluralité de dessus de touches.

9. Procédé selon la revendication 8 dans lequel le film de guide de lumière comprend un film souple de guide de lumière.

10. Procédé selon la revendication 8 dans lequel la détermination de la pluralité de différentes épaisseurs pour le film de guide de lumière correspondant comprend, au moins en partie, la détermination d'au moins une parmi une partie périphérique (202) plus épaisse et une partie périphérique plus fine du film de guide de lumière qu'une partie intérieure (201) de celui-ci.

11. Procédé selon la revendication 8 comprenant en outre :
la formation (102) du film de guide de lumière ;
la formation (103) d'un clavier en utilisant la pluralité de dessus de touches et le film de guide de lumière disposé sur une face inférieure de la pluralité de dessus de touches.

12. Procédé selon la revendication 11 dans lequel la formation du film de guide de lumière comprend, au moins en partie, le co-moulage de parties plus épaisses du film de guide de lumière avec de parties moins épaisses du film de guide de lumière.

13. Procédé selon la revendication 11 dans lequel la formation du clavier comprend en outre la disposition de sources de lumière (204) à éclairage latéral le long d'une périphérie du film de guide de lumière.

14. Procédé selon la revendication 13 dans lequel les sources de lumière à éclairage latéral comprennent des diodes électroluminescentes.
